# EUROPEAN PATENT APPLICATION

(11) **EP 0 604 091 A2**
(43) Date of publication of application: **29.06.1994**
(21) Application number: 93310031.5
(22) Date of filing: 13.12.1993
(51) Int. Cl.: G05B 15/02

(54) **Monitoring and controlling method and system**

(30) Priority: 21.12.1992 JP 339953/92
(71) Applicant: HITACHI, LTD., Chiyoda-ku, Tokyo 100 (JP)
(72) Inventor: Kokai, Yutaka, Katsuta-shi (JP); Fukui, Chihiro, Hitachi-shi (JP); Kudo, Hiroyuki, Hitachi-shi (JP); Kawakami, Junzo, Mito-shi (JP)
(74) Representative: Calderbank, Thomas Roger

(57) **Abstract**

In a monitoring and controlling system for monitoring and controlling each part (11a, 11b, 11c) of a large-scale, wide-area object to be monitored and controlled by plural computers (10a, 10b, 10c), there is provided unit (14) means for allocating at least one of the processes to be executed by a self-computer to another computer based on the state of the object to be monitored and controlled.

## Description

The present invention relates to a system configured of a plurality of computers for fields of electric power system, hydro-electric power generation, steam-power generation, nuclear power generation, steel, petroleum chemistry, water-supply and sewerage, traffic, freight by train, securities and exchange business and so forth. More particularly, the invention relates to a monitor control system which is required to read a status of an object to be monitored, swiftly determine how to cope with the status, and control the object according to its status.

As such a monitoring and controlling device, as described in a literature (Hitachi Review, volume 70-5, pp. 1 to 75, May, 1988), a conventional device is configured of a plurality of computers connected with an object to be monitored and controlled through a wide-area communication network so that the object may be monitored and controlled on line. Each computer takes a responsibility of monitoring and controlling each part of the object.

Such a prior art is insufficient in terms of performance of a communicating means between the computers and hence cannot collect a large amount of data about an object to be monitored and controlled for a short time. If some phenomenon took place in the object, a control protecting unit provided with the object merely operated for doing a high-speed control operation locally. Hence, the prior art could not perform a high-speed optimum control over an overall widely-distributed system such as an electric power system or a road traffic network.

Further, the computer for monitoring and controlling the object uses a duplex system for enhancing the reliability. For the purpose of backup, execution procedure and data are located in a shared disk unit so that the process may be switched over if one sub-system fails. In such a system, however, the restriction imposed by the shared disk unit makes it difficult to use many computers or widely distributed plural computers. Further, such a system also has difficulty in increasing a computing capability and in expanding or maintaining the system.

An object of the present invention is to provide a monitoring and controlling method and system which can optimally control a large-scale, wide-area object to be monitored such as an electric power monitoring and controlling system.

To attain the object, according to the present invention, a system configured of plural computers each for monitoring and controlling a part of an object to be monitored and controlled operates to read the status of the object and allocate at least part of the process to be executed by a self-computer from the self-computer to another computer, based on the read status.

Further, according to the present invention, a system for monitoring and controlling each part of an object to be monitored and controlled provides means for allocating at least one part of the process to be executed by a self-computer from the self-computer to another computer, based on the read status.

Based on the status of an object to be monitored and controlled, the computers allocated to respective parts of the object to be monitored and controlled operate so that at least part of a process to be executed by one computer may be allocated from the one computer to another computer based on the status of the object. Hence, distribution of process among the plural computers is effected according to the status of the object to be monitored and controlled so as to optimally control a large-scale object.

The preferred embodiments of the present invention will now be described by way of example, with reference to the drawings accompanying this specification in which:
Fig. 1 is a block diagram showing a system according to an embodiment of the present invention;
Fig. 2 is a block diagram showing a system according to another embodiment of the present invention;
Fig. 3 is an explanatory view showing a processing operation of the system shown in Fig. 2;
Fig. 4 is a diagram showing a configuration of a coordinating unit included in the embodiment of the present invention;
Figs. 5A, 5B and 5C are diagrams for explaining a concrete arrangement of each component contained in the coordinating unit shown in Fig. 4;
Figs. 6A and 6B are diagrams showing an electric power system to which an embodiment of the invention is applied;
Fig. 7 is a block diagram showing an electric power system to which another embodiment of the invention is applied;
Fig. 8 is a block diagram showing an electric power system to which another embodiment of the invention is applied;
Fig. 9 is a block diagram for explaining another embodiment of the present invention;
Fig. 10 is a diagram for explaining a railroad system to which an embodiment of the present invention is applied; and
Fig. 11 is a diagram for explaining a water-supply and sewage system to which an embodiment of the present invention is applied.

Hereafter, the present invention will be described based on the embodiments.

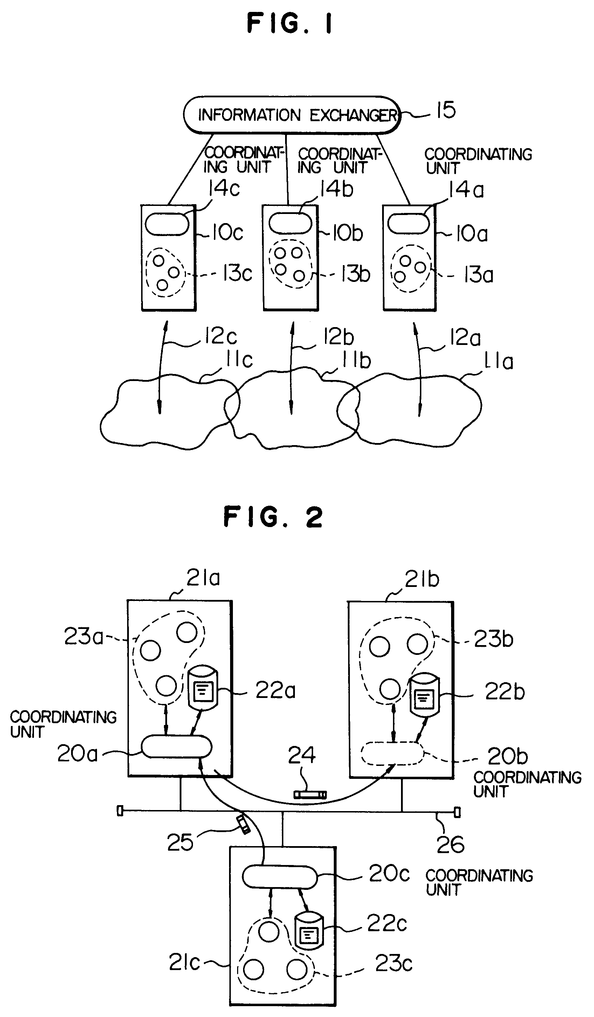

Fig. 1 shows a configuration of a monitoring and controlling system according to an embodiment of the present invention. 10a to 10c denote computers for monitoring and controlling a status of a facility to be monitored. 11a to 11c denote objects to be monitored and controlled. 12a to 12c denote information between the objects and the computers. 13a to 13c denote a group of task function processes such as monitoring or handling. 14a to 14c denote coordinating means. 15 denotes an information exchanger between the computers.

If a status change (such as a change of a voltage or a current value) takes place in the objects 11a to 11c, the change is informed as the object information 12a to 12c to the computers 10a to 10c. The groups 13a to 13c of task function processes such as monitoring or handling starts to operate for obtaining a predetermined result. The obtained result is fed back as the object informations 12a to 12c to the objects 11a to 11c to be monitored and controlled.

In such a system, the coordinating means 14a to 14c operate to exchange information between the coordinating means through the information exchanger 15 between the computers, based on the statuses of the object informations 12a to 12c and the task function process groups 13a to 13c and performs the coordinating operation.

If many status changes continuously take place in the object 11a, the information about the status changes is frequently informed as the object information 12a to the computer 10a so that the group 13a of the task function processes may continuously operate. This leads to remarkable increase of CPU load. On the other hand, the remaining computers 10b and 10c keep the CPU loads low unless the status changes take place in the objects 11b and 11c which they take a responsibility of. Therefore, the coordinating means 14a have a talk with the other coordinating means 14b and 14c about vicarious (substitute) execution of part of a process of the task function process group 13a. In this case, in the case where the object 11b adjacent to the object 11a is determined to be likely to suffer from the adverse effect of the object 11a by considering the characteristic of the object, the coordinating means 14a operates to determine that the substitute execution be assigned to the computer 10c even if the value of a so-called substitutability (load factor of CPU) of the computer 10b indicates a higher degree of Substitutability (i.e., lower CPU load factor) than that of the computer 10c. Then, the computer 10a transfers a procedure code of the part of the process of the task function process group 13a and a replica object of data to the computer 10c through the information exchanger 15 so that the transferred process be executed under the control of the coordinating means 14c. The output occurring in the executing process is executed in the computer 10c without having to change the procedure code object and data object just by passing them to the coordinating means 14a through the coordinating means 14c and the information exchanger 15. With the foregoing operation, the computer 10a can execute a series of operations as if the performance of the CPU is increased.

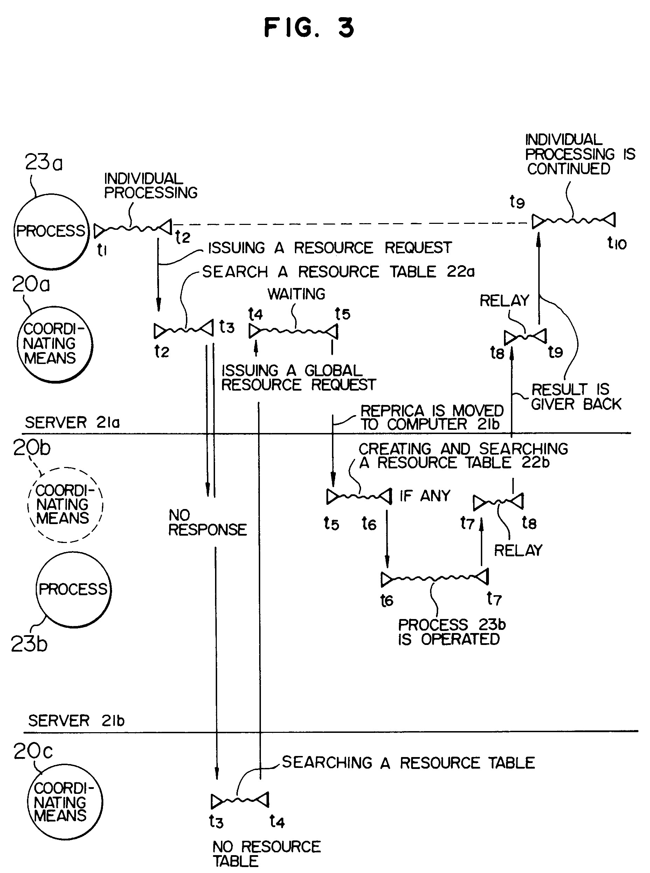

Another embodiment of the invention is shown in Fig. 2 and its operation is shown in Fig. 3.

21a to 21c denote monitoring and controlling computers for monitoring a status of a facility to be monitored and creating a handling command. 23a to 23c denote groups of task function processes such as monitoring and handling. 20a to 20c denote coordinating means. 22a to 22c denote resource tables in the computers. 24 and 25 denote information packets. 26 denotes an information exchanger between the computers. In the illustrated example, it is supposed that, the computer 21 is an existing, conventional one and that no coordinating means has been originally provided. The operation is directed to the case where the coordinating means 20b is newly added in expanding the system.

Fig. 3 shows an operation of the coordinating means in the arrangement of Fig. 2. The group 23a of task function processes is assumed to execute individual or task by task processes such as detection of a status change and processing of display information, starting from a time t1. If, at a time t2, the information on an object to be monitored/controlled which is outside of the responsible range of the computer 21a is required, a request for a resource is issued from the group 23a of task function processes to the coordinating means 20a. In response, at a time t3, the coordinating means 20a inquires an outside computer of information about the other objects which is outside of the responsible range of the computer 21a in the form of a global resource request. Since the computer 21b has no coordinating means, no response is given back. In the computer 21c, on the other hand, the coordinating means 20c searches the resource table 22c to determine whether or not the requested information exists. As a result of the determination, a response about no information is given back to the coordinating means 20a at a time t4. Further, the coordinating means 20a waits for a response from the computer 21b for a certain time but no response is given back at a time t5. That is, it is determined that no coordinating means is provided or some obstacle takes place in the computer 21b and at the time t5 the replica object of the coordinating means 20a itself is transferred to the computer 21b in the form of a packet 24. And, the coordinating means 20b is newly produced so that the new coordinating means 20b may investigate the status of a resource in the computer 21b and create the resource table 22b. Then, at a time t6, the coordinating means 20b determines that the requested resource exists. The group 23b of task function processes is started to create the request information. At a time t9, the request information is given back to the group 23a through the coordinating means 20b and 20a. Subsequently, the group 23a continues to execute an individual process. Further, the newly created coordinating means 20b enables the computer 21b to execute a coordinating operation.

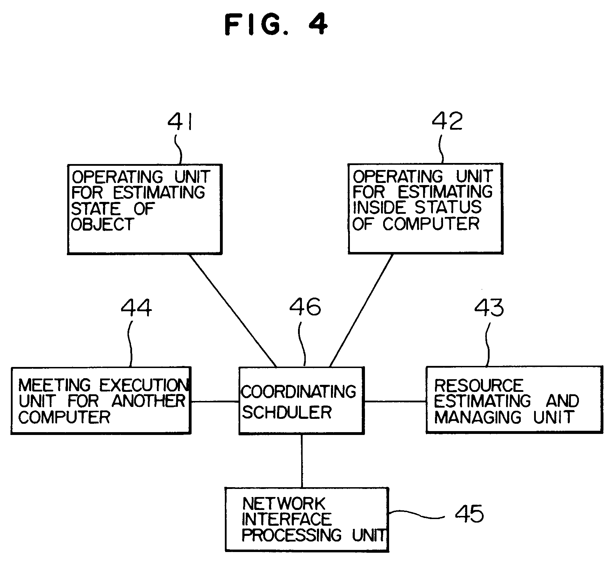

Fig. 4 shows an arrangement of the coordinating means. 41 denotes an estimating and operating unit for monitoring and estimating the status of an object to be monitored and controlled. The estimating and operating unit 41 has a function of estimating a history of status changes of the object and a occurrence frequency in future. 42 denotes an operating unit for estimating a CPU load factor or an inside status of the computer such as a disk or a memory. 43 denotes a processing unit for estimating and managing the status of a task function process, an OS process or the like. 44 denotes a meeting executing unit for having a talk and holding a meeting with the coordinating means provided in other computers. 45 denotes an interface processing unit which takes an interface with a network connecting among the computers. 46 denotes a coordinating scheduler for determining an execution timing of those processing and operating units. Each of these process execution units operates to perform its own function by using a system call of UNIXOS or a RPC (Remote Procedure Call) of a service function of a distributed processing environment such as OSF/DCE.

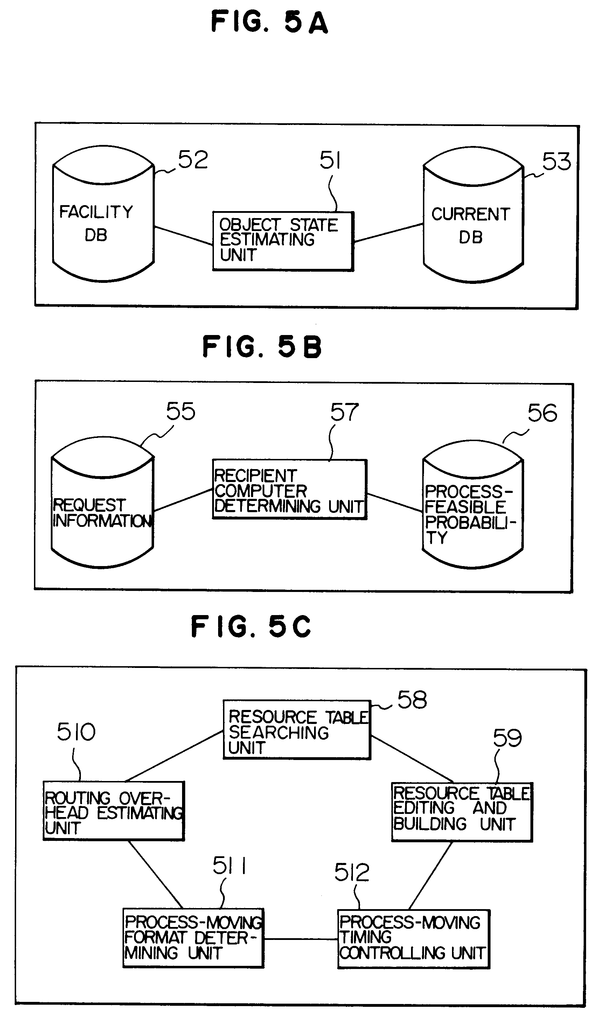

The estimating and operating unit 41 is arranged of functional blocks shown in Figs. 5A-5C. 51 denotes a unit for estimating the status of an object to be monitored. The status estimating unit 51 serves to obtain a history of a status change or a future trend prediction of the object by referring to a facility structure database 52 for storing data about a facility structure of the object and a current database 53 for indicating a current state. The meeting executing unit 44 for another computer performs a process by referring to the information database for another computer. The database contains process request information data 55 requested by the computer to which the database belongs (request process items such as no-voltage facility determination, fault facility determination and the like and desired target process terminating time), process-acceptability data 56 (probability of meeting the target process terminating time or estimated delay time of the same) regarding process request information data from another computer, and a determining unit 57 for determining a recipient computer which takes a responsibility of the process. The resource managing and estimating unit 43 is arranged to have a resource table searching section 58, a resource table editing and building section 59, both of which operate in response to a request for a resource from a general task process, an operating unit 510 for estimating overhead or feasibility of routing occurring when a process is moved between the computers, a process-moving format determining unit 511, and a process-moving timing control unit 512.

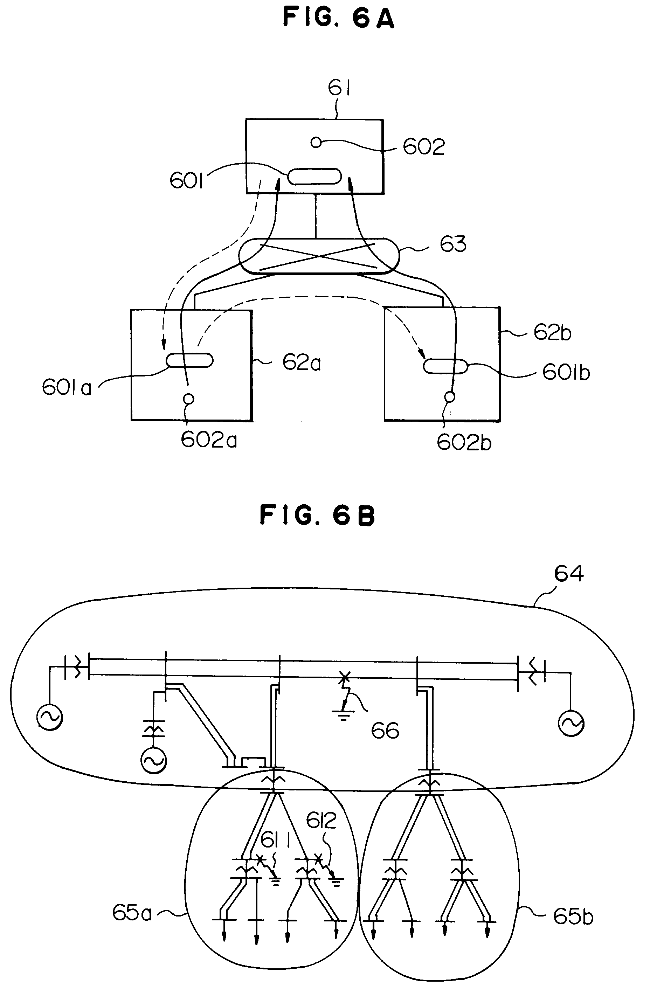

The description will be oriented to a system for monitoring and controlling an electric power system shown in Figs. 6A and 6B which is an embodiment of the present invention. 61 denotes a computer provided in a central system for monitoring and controlling power feeding. 62a and 62b denote computers provided in the local systems for monitoring and controlling power feeding. These computers are connected through a wide-area optical fiber network 63. 64 denotes a trunk electric power system monitored and controlled by the central system 61. 65a and 65b are systems having lower voltage levels monitored and controlled by the local system computers 62a and 62b, respectively. The central computer system 61 mainly takes a responsibility of a frequency of an overall electric power system or a voltage of a trunk power feeding system, while the local systems 62a and 62b mainly manage voltages of the local systems.

601, 601a and 601b denote coordinating means. 602, 602a and 602b denote processes for executing the fault facility determination of a partial network system. It is assumed that a lightning fault 66 takes place in the trunk system 64, causing one circuit to fail, which in turn causes many protective relays to be operated in the partial network system 65a, so that black-out spread. It is further assumed that, after that, a wide-area black-out takes place in the partial network system 65b, for the same reason. In this case, it becomes necessary that the fault facility be swiftly determined for searching the cause of the fault and the duration of black-out be reduced.

Hence, in the computer systems 61, 62a and 62b, in response to indications from the coordinating means 601, 601a and 602b, the processes 602, 602a and 602b operate to determine which of the facilities had a fault based on the operating information on a protective relay or a circuit breaker within respective responsible areas. However, if the black-out spreads in a wider range, as in this example, it is difficult to grasp the status around the connecting facility between the trunk electric power system 64 and the partial network system 65a or 65b. Therefore it becomes necessary to collect all the data of an object to be monitored at one place, and re-determine which of the facilities had a fault. That is, the processed results of the fault facility determinations 602, 602a and 602b of the partial network system indicate that the determined results of the fault facility are indefinite. Therefore, the process is shifted to the meeting execution unit 44 for another computer through the coordinating schedule 46 provided in the coordinating means 601, 601a and 601b. At the unit 44, the coordinating means 601, 601a and 601b select the most appropriate computer for re-determining the fault facility. The coordinating means 601 has a function of a chairman and asks the coordinating means 601a and 601b of whether or not the process for determining the fault facility considering the overall electric power system status is possible. The coordinating means 601a and 601b estimate events presumed to take place in the partial systems 65a and 65b from the past history, seek a processing performance allowance or margin (CPU load factor or an empty state of a disk or a memory) of the computer and a processing terminating presumed time for the case where the fault facility determining process is executed considering all the electric power system status, and then, give a so-called acceptability value back to the coordinating means 601 which plays a role of the chairman. The coordinating means 601 also estimates the acceptability value of its own computer, collate the estimated value with the replies from the coordinating means 601a and 601b, and determine the most appropriate computer system based on the collated result.

As a result, if the computer 61 is determined to be the most appropriate, the procedure code objects and the data objects of the processes 602, 602a and 602b for executing the fault facility determination of the partial network system are transferred to the computer 61 so that the status around the connecting facility may be re-grasped and the status of the black-out in the overall electric power system may be grasped for determining which of the facilities had a fault. The processes 602, 602a and 602b for determining the fault facility in partial network systems, in general, handle different formats of data (according to the system introduction times and the manufacturers). However, by transferring the data objects and the procedure code objects, the data representation is generalized and abstracted so that the connection among the processes 602, 602a and 602b for determining fault facilities are coordinated with one another.

Another operation of the arrangement shown in Figs. 6A and 6B will be described. 61 denotes a central system for monitoring and controlling power feeding. 62a and 62b are local systems for monitoring and controlling power feeding. These computer systems are connected through an optical fiber network 63. The central system 61 for monitoring and controlling power feeding operates to monitor and control the trunk power feeding system 64 shown in Fig. 6, while the local systems 62a and 62b operate to control and monitor the local systems 65a and 65b having lower voltage levels, respectively.

601, 601a and 601b denote the coordinating means. 602, 602a and 602b denote processes for executing determination of a fault facility of a partial network system. It is assumed that a fault 611 takes place in a transformer of the partial system 65a, causing the transformer to be stopped in a protective mode (the first transformer is stopped) and thereafter a fault takes place in another transformer of the partial network system, causing another transformer to also be stopped in a protective mode (the second transformer is stopped), resulting in occurrence of a wide area blackout. Based on the information about a state change indicating the transformer of the partial network system 65a is stopped in a protective mode because of the fault caused in the transformer, the process 602a for determining a fault facility starts to determine which of the facilities becomes failed. Then, if event occurs in which the protecting unit is activated because of a fault in another transformer of the partial system 65a, the coordinating means 601a requests the other coordinating means 601 and 601b to do the substitute task of determining which of the facilities failed with respect to the stoppage of the second transformer in place of the coordinating means 601a. In response, it is decided that the coordinating means 601b takes over the substitute task after discussions made between the coordinating means 601 and the coordinating means 601b. Therefore, the coordinating means 601a moves a replica object in the form of preservation of history of the processing of the fault facility determination process 602a up to that point from the local system 62a for monitoring and controlling power feeding to the local system 62b. The local system 62b retries the fault facility determining process by considering both of the events of the stoppages of the first and the second transformers. On the other hand, the fault facility determining process 601a of the local system 62a executes the fault facility determining process to determine that the fault is caused by the event of the stoppage of the first transformer and indicate the result to the user. Thereafter, the fault facility determining replica object 601b provided in the local system 62b shows the result of determining the fault facility to the user by considering both of the events of the stoppage of the first and the second transformers. As stated above, by dynamically moving the processing object, it is possible to make an effective use of the resource of computer systems of all the electric power system and monitor and control it in the optimal way.

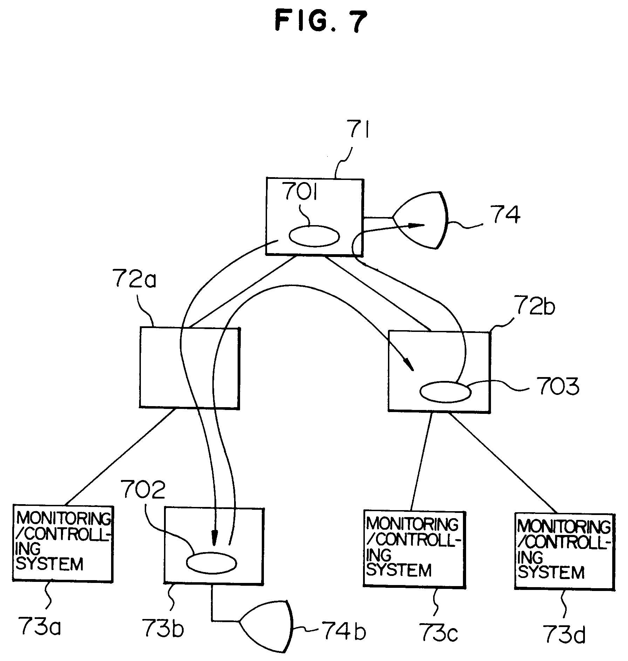

Fig. 7 shows another embodiment. 71 denotes a central system for monitoring and controlling electric power feeding. 72a to 72b denote local systems for monitoring and controlling electric power feeding. 73a to 73d denote systems for monitoring and controlling a power plant or a power substation. 701, 702 and 703 denote coordinating means installed in each computer system. In the case where an operator of the central system 71 needs to grasp an operating state (connecting diagram, bus voltage, electric power, etc.) of a facility such as a bus of a power substation to be monitored and controlled by the system 73b through a VDT 74, the coordinating means 701, 702 and 703 are operated in concert in the present invention. More specifically, the coordinating means 701 of the central system 71 starts the coordinating means 702 of the system 73b for discussing whether the facility monitoring operation may be executable. If, however, the processing load of the computer of the system 73b is higher than a predetermined level (for example, in the case where the operator of the system 73b is checking and editing the operating procedure of an object to be monitored and controlled through the VDT 74b), this coordinating means 702 selects the most appropriate computer system for executing the operation of monitoring the facility among other computer systems. To this end, the coordinating means 702 asks other computers to submit the current load values of the computers and indexes indicating whether or not the function of the object for monitoring a facility is executable. Then, of the computers from which a response is given back within a predetermined response time, a recipient computer is determined based on the index. For example, if the local system 72b is determined to be the most appropriate, the coordinating means 702 of the system 73b moves a facility monitoring task object of the system 73b to the local feeding monitoring/controlling system 72b so that the process be executed under the control of the coordinating means 703. The processed result is displayed on the VDT 74 through the coordinating means 701 of the central system 71. With this operation, the operator of the central system 71 can swiftly collect the necessary information without having to disturb the operator of the system 73b, who is doing his own task.

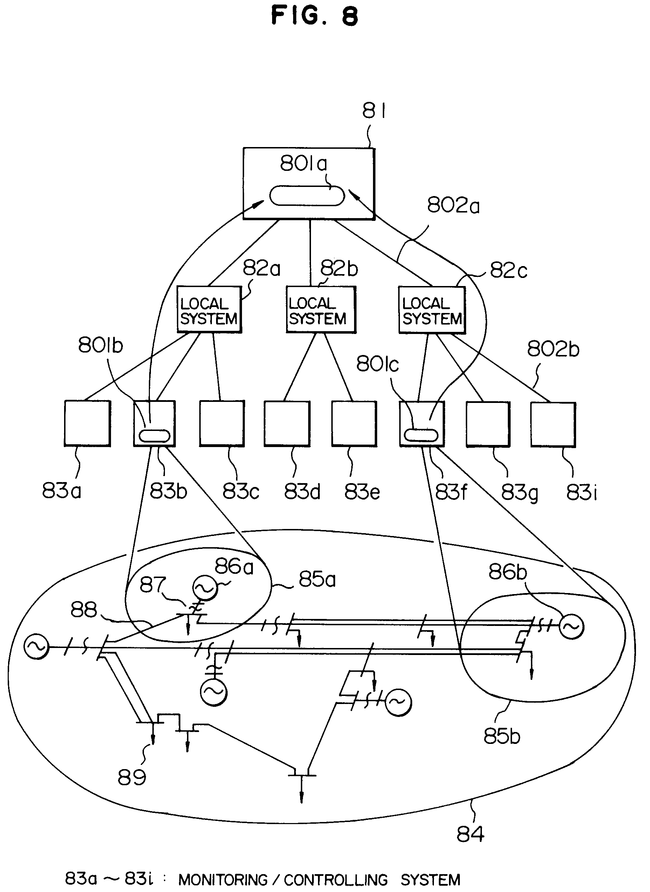

Fig. 8 shows another embodiment of the present invention. 81 denotes a central system for monitoring and controlling power feeding. 82a to 82c denote local systems for monitoring and controlling power feeding. 83a to 83i denote systems for monitoring and controlling a power plant or a power substation. It is assumed that these computer systems are connected through wide-area communication lines 802a and 802b. 84 denotes a power system to be monitored and controlled by these monitoring and controlling systems. The power system 84 is configured of a power generator 86, a transformer 87, a power line 88, and a load 89. The power system 84 is divided into partial systems 85a and 85b when it is monitored and controlled. The partial system 85a is monitored and controlled by the system 83b and the partial system 86a is monitored and controlled by the system 83f. In addition, 801a to 801c denote coordinating means.

In the case where a lightning fault takes place in the partial system 85a and the power line 88 is cut off, a simulating process is started under the control of the coordinating means 801b provided in the system 83b so as to simulate the operation of the power generator 86a. In this case, since the power line 88 is cut off so that the power generator may not emit an electric output, increasing rotation speed of the power generator 86a so high, the generator 86a is stepped out in some seconds. In this case, however, by lowering the output of the power generator 86b provided in the partial system 85b, it is possible to prevent the power generator 86a from being stepped out. In such a case, therefore, the simulating functions of the computer 83b and 83f are both started through the coordinating means 801a, 801b and 801c so as to output both of the simulated results. Further, to estimate the overall system, the central feeding monitoring/controlling system 81 is operated to collect the replica objects of the simulating functions of the computers 83b and 83f for the purpose of retrying the simulation for grasping the overall system and determining a measure for controlling the system.

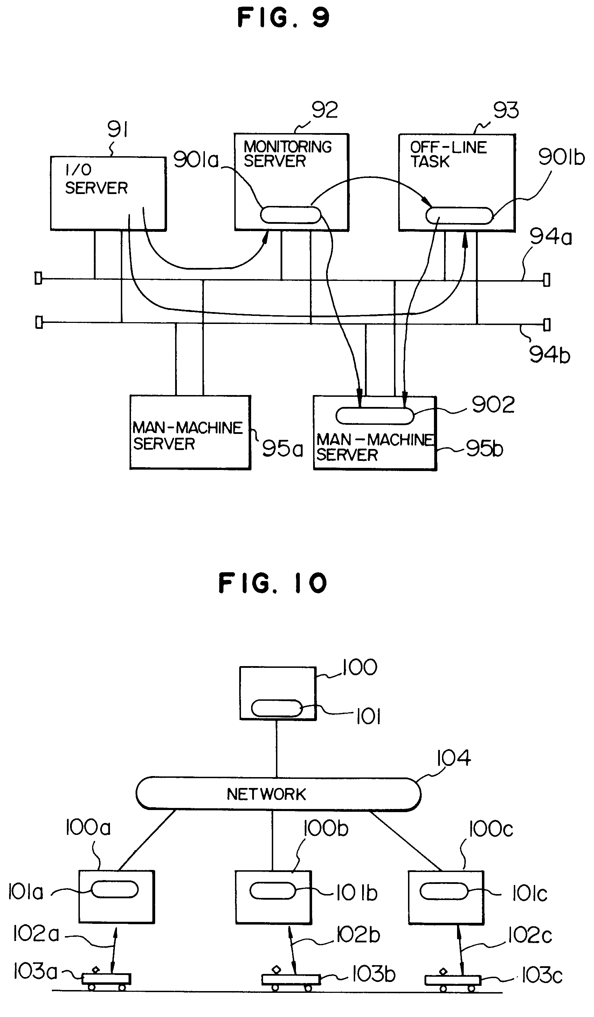

Fig. 9 shows an embodiment for enhancing reliability according to the present invention. 91 denotes an I/O server for reading information from an object to be monitored and controlled. 92 denotes a monitoring operation server. 93 denotes an off-line task server, which takes a responsibility of a task-aiding function for determining an operating schedule of the object. 95a and 95b are man-machine servers, which operate to submit information to the operator. A network used in this embodiment is dualized as 94a and 94b. In the configuration, information from the I/O server is sent to the monitoring operation server 92 through the duplex network and also to the off-line task server 93. In the monitoring operation server 92, a monitoring task function process is operated under the control of the coordinating means 901a so as to diagnose the state of the object to be monitored. The processed result is sent to the man-machine sever 95b through the coordinating means 902, from which server 95b the result is shown to the operator.

Consider some failure takes place in the monitoring operation server 92 in this case. At such time, the procedure code and the replica object of data about the coordinating means 901a of the monitoring server 92 and the monitoring process are moved to the off-line operating server 93. On the other hand, the coordinating means 902 of the man-machine server 95b has recognized that the information source is the coordinating means 901a. Hence, in view of the fact that the coordinating means 901a has moved to the off-line operating server 93 so that it is changed to the coordinating means 901b, both of the coordinating means re-recognize their locations. Based on the determined priority, the coordinating means 901b stops the off-line operation which has been already executed by the off-line task server 93 and causes the monitoring operation to be preferentially performed. These coordinating operations make it possible to continue execution of the monitoring operation, thereby enhancing fault-tolerance.

Fig. 10 shows a system for monitoring and controlling a railroad traffic network which is an embodiment of the present invention. 100, 100a, 100b, and 100c denote monitoring and controlling computer systems. 101, 101a, 101b and 101c denote coordinating processes. 103a, 103b, and 103c denote conveyances such as an electric railcar. 102a, 102b, and 102c denote information to be exchanged between an object to be monitored and the computer systems. 104 denotes a network for connecting the computer systems. If a fault or an accident occurs in an electric railcar to be monitored and the timetable is confused on that reason, like the embodiment applied to the system for monitoring and controlling power feeding, the coordinating processes 101, 101a, 101b and 101c serve to perform the most appropriate control. Thus, the present invention offers a great advantage.

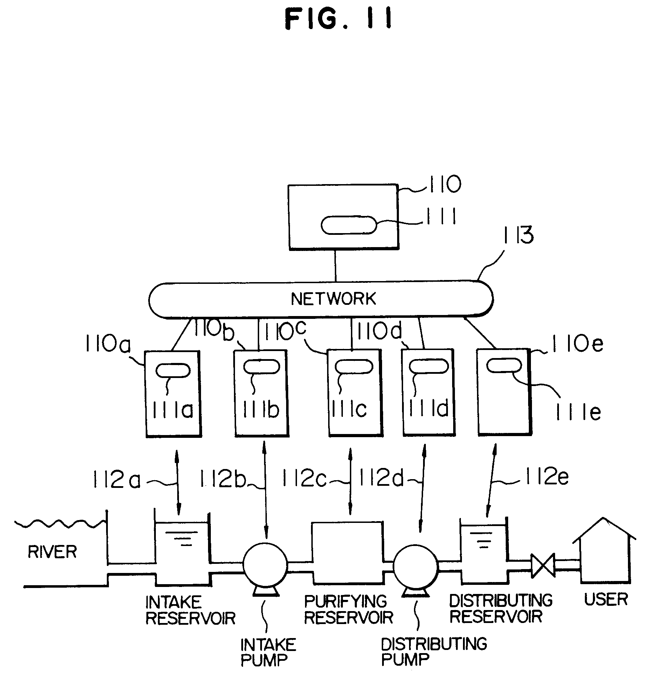

Fig. 11 shows an embodiment of the invention implemented in the system for monitoring and controlling water-supply and sewerage. 110 and 110a to 110e denote monitoring and controlling computer systems. 111 and 111a to 111e denote coordinating processes. 112a to 112e denote information to be exchanged between an object to be monitored such as a intake pump and the computer systems. 113 denotes a network for connecting the computer systems. Like the system for monitoring and controlling power feeding system, the coordinating processes 111 and 111a to 111e are operated to perform the most appropriate control of the water-supply and sewerage system. Thus, the present invention offers a great advantage.

In addition to the monitoring and controlling system described as above, the present invention can be applied to a monitoring and controlling system in the general industry such as steel, chemical plant, or building management which has plural computers connected with a communicating unit. It is obvious that the effect is great.

As set forth above, according to the present invention, plural computers are connected through an information exchanger and the process to be executed by the computer is dynamically changed based on the object to be monitored and controlled and the state of the computer. The object to be monitored and controlled is allowed to be most appropriately monitored in a large-scale, wide field. Further, the invention may achieve a monitoring and controlling system with superior maintenance and expansibility.

## Claims

1. A method for monitoring and controlling respective parts of an object (11) by means of plural computers (10a, 10b, 10c), characterized by comprising the steps of reading a state of said object, and allocating at least a part of a process (13) to be executed by a self-computer from the self-computer to another computer, based on said read state, so as to execute the monitoring and controlling.

2. A method for monitoring and controlling respective parts of an object by means of plural computers (10a, 10b, 10c), characterized by comprising the steps of reading a state of said object (11), reading information representing internal states of other computers including a self-computer, and allocating at least one part of a process to be executed by the self-computer from the computer to another computer, based on the read state of said object and the internal states of said computers, so as to execute the monitoring and controlling.

3. A method for monitoring and controlling an object by means of plural computers (10a, 10b, 10c) connected with one another, characterized by comprising the steps of estimating (42) internal states of said computers, estimating (41) a state of said object, and coordinating (46) said plural computers with one another based on said estimated results, so as to execute the monitoring and controlling.

4. A system for monitoring and controlling respective parts of an object by means of plural computers (10a, 10b, 10c), characterized by comprising means (14a, 14b, 14c) for allocating at least one part of a process to be executed by a self-computer from the self-computer to another computer, based on the state of said object (11).

5. A system for monitoring and controlling respective parts of an object by means of plural computers (10a, 10b, 10c), characterized by comprising means (14a, 14b, 14c) for allocating at least one part of a process to be executed by a self-computer from the self-computer to another computer, based on the state of said object and the internal state of other computers including the self-computer.

6. A monitoring and controlling system as claimed in claim 4 or 5, characterized in that each computer includes means (14a, 14b, 14c) for allocating at least one part of a process to be executed by said self-computer from the self-computer to another computer.

7. A monitoring and controlling system as claimed in claim 4 or 5, characterized in that said means (14a, 14b, 14c) for allocating part of a process to be executed by the self-computer from the self-computer to another computer has a function of estimating a feasibility of executing said process by means of said another computer.

8. A system for monitoring and controlling an object by means of plural computers (10a, 10b, 10c) connected through an information exchanger (15), characterized by comprising means (42) for estimating internal states of said plural computers; means (41) for estimating a state of said object; and means (46) for coordinating said plural computers with one another based on the internal states of said computers and the state of said object.

9. A monitoring and controlling system as claimed in claim 8, characterized in that said coordinating means (14a, 14b, 14c) operates to allocate at least one part of a process to be executed by one computer among said plural computers from the one computer to another computer, based on said estimated results.

10. A monitoring and controlling system as claimed in claim 9, characterized in that said coordinating means (14a, 14b, 14c) estimates a feasibility of executing said process by means of another computer to which the process is to be allocated.

11. A monitoring and controlling system as claimed in any one of claims 8 to 10, characterized in that said coordinating means (14a, 14b, 14c) moves a procedure or data about said process to be executed by the computer to another computer through said information exchanger (15).

12. A monitoring and controlling system as claimed in claim 8, characterized in that said coordinating means (14a, 14b, 14c) collects resources from other computers if the resources required for the process to be executed by said each computer is insufficient.
